Europäisches Patentamt

European Patent Office

Office européen des brevets

(19)

(11) **EP 1 245 965 A1**

(12) **DEMANDE DE BREVET EUROPEEN**

(43) Date de publication:
**02.10.2002 Bulletin 2002/40**

(51) Int Cl.⁷: $G01S\ 13/44$, $G01S\ 7/28$

(21) Numéro de dépôt: **02290733.1**

(22) Date de dépôt: **22.03.2002**

(84) Etats contractants désignés:
**AT BE CH CY DE DK ES FI FR GB GR IE IT LI LU MC NL PT SE TR**
Etats d'extension désignés:
**AL LT LV MK RO SI**

(30) Priorité: **27.03.2001  FR 0104114**

(71) Demandeur: **Thales**
**75008 Paris (FR)**

(72) Inventeur: **Desodt, Guy, c/o THALEZ, Intell. Prop.**
**94117 Arcueil Cedex (FR)**

(74) Mandataire: **Lucas, Laurent Jacques**
**Thales Intellectual Property,**
**13, avenue du Président Salvador Allende**
**94117 Arcueil Cedex (FR)**

(54) **Procédé et système de détection, notamment radar à réseau d'émission et réception et à formation de faisceau par le calcul**

(57)    La présente invention concerne un système de détection.

La détection portant sur N signaux reçus, le système comporte des moyens de traitement (40) effectuant au moins une première étape (31) d'addition de fonctions des modules des signaux suivie d'une deuxième étape (32) de comparaison de la somme à un seuil donné, une détection correspondant au dépassement du seuil.

L'invention s'applique particulièrement pour un radar à émission synthétique et à formation de faisceau par le calcul, destiné notamment à la surveillance de l'espace aérien.

```
┌─────────────────────────────────────────────┐
│  TRAITEMENT À FAIBLE RÉSOLUTION             │─31
└─────────────────────────────────────────────┘
                      │
              ┌───────────────┐
              │ PRÉ-DÉTECTION │─32
              └───────────────┘
                      │
┌─────────────────────────────────────────────┐
│  TRAITEMENT À PLEINE RÉSOLUTION             │─33
└─────────────────────────────────────────────┘
```

FIG.3

## Description

La présente invention concerne un procédé et système de détection. Elle concerne particulièrement un radar à émission synthétique et à formation de faisceau par le calcul, destiné notamment à la surveillance de l'espace aérien.

Il est connu, notamment par la demande de brevet française FR n°87 08186 de réaliser un radar de surveillance aérienne à antenne répartie sur une grande surface. Le principe de fonctionnement de ce type de radar est décrit dans l'ouvrage de J. Darricaud : Physique et théorie du radar, Tome 3, 3ème édition 1994, pages 538 et suivantes. L'antenne d'un tel radar comporte par exemple un réseau de modules d'émission et un réseau de modules de réception. Le réseau d'émission comporte ainsi par exemple des antennes élémentaires réparties sur un cercle de diamètre de plusieurs dizaines de mètres, voire plusieurs centaines de mètres. La disposition circulaire n'est pas obligatoire, la répartition des antennes élémentaires peut en effet suivre des lignes qui ne sont pas circulaires. Chaque antenne élémentaire est par exemple disposée au sommet d'un mât au pied duquel se trouvent des moyens d'émission d'une onde hyperfréquence, l'ensemble formant un module d'émission. De même, le réseau de réception comporte des capteurs élémentaires répartis par exemple sur un cercle de grande dimension, par exemple concentrique par rapport au précédent. La numérisation du signal reçu est effectuée au niveau d'un capteur élémentaire, puis le signal numérisé est envoyé à un centre pour la détermination de faisceau par le calcul (FFC). Une telle antenne répartie a notamment comme avantage d'être peu vulnérable. En effet, une attaque extérieure peut facilement détruire un ou plusieurs modules élémentaires mais très difficilement la totalité ou la majeure partie du réseau. En cas d'agression, seuls quelques modules élémentaires sont détruits mais pas l'ensemble. L'antenne peut donc continuer à fonctionner. Elle présente donc une faible vulnérabilité, du moins elle suit une dégradation douce en cas d'attaque.

Chaque module d'émission émet dans une sous-bande de la bande instantanée d'émission du radar. Ainsi, si la bande d'émission du radar est choisie égale à B kHz, et si le réseau d'émission comporte N modules d'émission, chaque module émet dans une sous-bande de B/N kHz, ce qui peut faire en pratique de l'ordre de quelques dizaines de kHz.

La loi qui définit l'ouverture d'antenne $\alpha$ est donnée approximativement par la relation suivante :

$$\alpha = 70° \text{ x } \lambda/d \tag{1}$$

où d est le diamètre d'antenne et $\lambda$ la longueur d'onde du radar.

Un choix de grand réseau s'accorde bien avec l'emploi de grandes longueurs d'onde, aboutissant par exemple à une largeur de faisceau de l'ordre du degré. La longueur d'onde peut être de quelques mètres.

Pour obtenir une bonne couverture radar, le réseau de réception comporte un grand nombre de capteurs élémentaires. Ce nombre N peut être proche de cent. Pour un réseau de plusieurs centaines de mètres de diamètre et une longueur d'onde métrique, ce nombre N donne un espacement entre récepteurs nettement supérieur à une demi-longueur d'onde. Un tel réseau est appelé un réseau lacunaire.

Si la bande de fréquence émise est, à titre d'exemple, de quelques centaines de kHz, la période d'échantillonnage des signaux reçus est de l'ordre de quelques $\mu$s. Il y a donc un flux de données complexes à traiter toutes ces quelques $\mu$s, d'autant plus important qu'il y a beaucoup de récepteurs. Ce flux de données doit par ailleurs être traité par une chaîne de traitement classique, c'est-à-dire notamment par des filtres Doppler, un circuit de formation de faisceaux par le calcul (FFC) et un circuit de compression d'impulsions. On considère par exemple un réseau de réception comportant 100 récepteurs élémentaires. En sortie de traitement FFC, il y a un certain nombre de faisceaux formés. Etant donné que le réseau est lacunaire, il y a plus de faisceaux que de capteurs élémentaires. En supposant qu'un faisceau occupe un espace angulaire d'environ 0,3° il faut 360/0,3 = 1200 faisceaux pour couvrir 360° en gisement. Si on envisage par ailleurs de couvrir 30° en site, on atteint le nombre de 120 000 faisceaux. La formation de faisceaux par le calcul accroît donc le débit dans le rapport de 120 000 (nombre de faisceaux) sur 100 (nombre de récepteurs). Avec une résolution de 1000 cases distance nécessitant 1000 filtres Doppler, on parvient à un débit de données en entrée considérable. De ce fait, la puissance de calcul nécessaire peut devenir gigantesque et atteindre ainsi quelques dizaines de téraopérations par secondes, soit quelques dizaines de fois $10^{12}$ opérations par seconde.

Un but de l'invention est notamment de réduire cette puissance de calcul nécessaire. A cet effet, l'invention a pour objet un système de détection portant sur N signaux reçus, le système comportant des moyens de traitement effectuant au moins une première étape d'addition de fonctions des modules des signaux. Cette première étape est suivie d'une deuxième étape de comparaison de la somme à un seuil donné, une détection correspondant au dépassement du seuil.

Dans un mode de réalisation préférentiel, la première étape effectue simplement l'addition des modules des signaux.

Le seuil peut être baissé d'un niveau correspondant à la perte de traitement non cohérent. Dans un autre mode de réalisation, la deuxième étape est suivie d'une étape effectuant traitement de confirmation de la détection sur les signaux qui ont donné lieu à détection, et/ou un traitement de localisation sur les signaux ayant donné lieu à détection. Le traitement de localisation peut effectuer un traitement cohérent des signaux ou une analyse de la phase des signaux.

Le système peut être un radar à formation de faisceau par le calcul et à antenne en réseau lacunaire. Les capteurs de cette antenne sont répartis en N sous-réseaux (SR1, ....SR6), les moyens de traitement additionnant dans la première étape (31) N signaux reçus chacun d'un sous-réseau. Ces sous-réseaux sont par exemple linéaires et disposés en polygone.

L'invention a également pour objet un procédé de détection.

D'autres caractéristiques et avantages de l'invention apparaîtront à l'aide de la description qui suit faite en regard de dessins annexés qui représentent :

- La figure 1, une illustration d'un radar à émission synthétique et à formation de faisceau par le calcul selon l'art antérieur, par la disposition de ses modules d'émission et de réception ;
- La figure 2, une illustration d'un signal reçu résultant de la répartition géographique des émetteurs du radar précité ;
- La figure 3, une illustration d'étapes d'un procédé selon l'invention, et du traitement d'un système de détection selon l'invention ;
- La figure 4, une illustration synoptique des moyens de traitements associés à la chaîne de réception d'un radar selon l'invention ;
- La figure 5, un exemple de structure en réseau d'une antenne d'un radar selon l'invention.

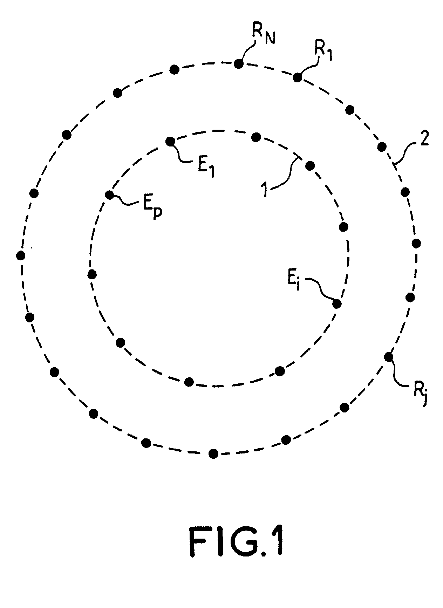

La figure 1 présente de façon schématique un radar à émission synthétique et à formation de faisceau par le calcul, notamment par la disposition des éléments de son antenne répartie. Ce radar comporte un réseau de P modules d'émission élémentaires $E_1,... E_i, ...E_P$ et un réseau de N modules de réception élémentaires $R_1, ...R_j, ...R_N$. Le réseau d'émission 1 est par exemple situé à l'intérieur du réseau de réception 2. L'émission est réalisée par l'ensemble des P éléments rayonnant $E_1,... E_i, ...E_P$ qui émettent simultanément des signaux différents. La réception est assurée par l'ensemble des N récepteurs $R_1, ...R_j, ...R_N$ qui reçoivent quasi simultanément les échos issus de l'émission.

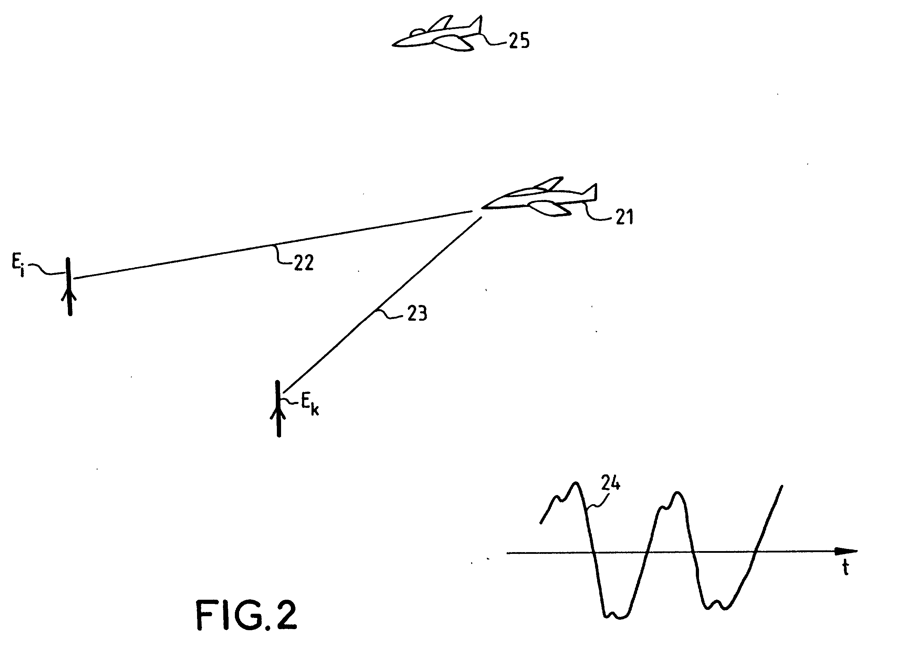

La figure 2 illustre un problème rencontré par un radar à antenne lacunaire répartie sur une grande surface. Cette figure montre que pour une même cible 21, le trajet aller-retour 22, 23 d'un signal radar à cette cible peut être très différent d'un émetteur ou d'un capteur à l'autre. Le signal global 24 combine les différents signaux reçus et notamment les différents déphasages dus aux différences de trajets 22, 23. Les différents signaux reçus issus des différents émetteurs constituent les composantes du signal global. Pour une cible 25 située à un autre endroit, la combinaison des retards est différente et donc le signal global 24 est lui aussi différent. Il faut donc un filtrage adapté à chaque direction, ou plutôt à chaque faisceau élémentaire. On a vu le nombre de faisceaux élémentaires nécessaire à la couverture de l'espace, ce nombre peut atteindre ou dépasser 100 000. Par ailleurs, le filtrage adapté décrit précédemment doit être appliqué pour chacun de ces faisceaux caractérisant une direction de visée. Il en résulte une puissance de calcul nécessaire très importante.

Ainsi, a la réception, un traitement cohérent classique consiste alors, pour chaque direction de visée, à :

- décomposer le signal reçu sur chaque récepteur selon les P composantes émises ;
- appliquer un jeu de NxP phases (une par émetteur et par récepteur), jeu qui dépend de la direction de visée ;
- additionner les NxP signaux ainsi déphasés.

Comme indiqué précédemment, si le nombre de lignes de visée $N_v$ est d'environ 100 000 et que le nombre N de capteurs est par exemple égal à 96, le traitement devra effectuer 100 000 combinaisons linéaires des 96 signaux reçus, et donc atteindre quelques dizaine de fois $10^{12}$ opérations.

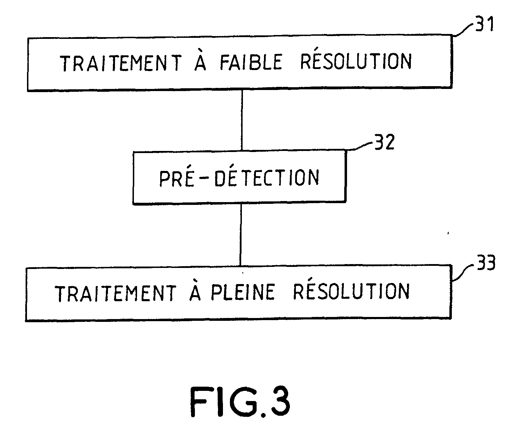

La figure 3 illustre notamment les étapes de traitement des signaux reçus effectuées par les moyens de traitement d'un système selon l'invention, pour la détection d'une cible. Pour illustrer ce traitement, on considère toujours l'exemple du radar à antenne répartie, en réseau lacunaire. Selon l'invention, une façon de réduire la puissance de calcul d'un traitement cohérent est d'effectuer d'abord une première étape 31 de traitement en faible résolution, permettant de réduire le nombre de points à calculer et le nombre de calculs pour obtenir chaque point, puis d'effectuer dans une deuxième étape 32 une pré-détection et enfin d'effectuer dans une étape suivante 33 un traitement à pleine résolution, du moins à résolution suffisante, uniquement dans les zones qui ont produit une détection, en fait les zones sélectionnées par la pré-détection.

Un traitement radar classique consiste généralement à effectuer le filtre adapté, puis à réaliser un test de détection sur le résultat. Dans le but de minimiser les pertes, ce filtre adapté est appliqué systématiquement sur toutes les cellules de l'espace à surveiller, chaque cellule étant caractérisée par une distance, une fréquence doppler et un angle. Les moyens de traitement d'un radar selon l'invention au contraire n'effectuent pas ce traitement et acceptent des pertes dans la première étape 31.

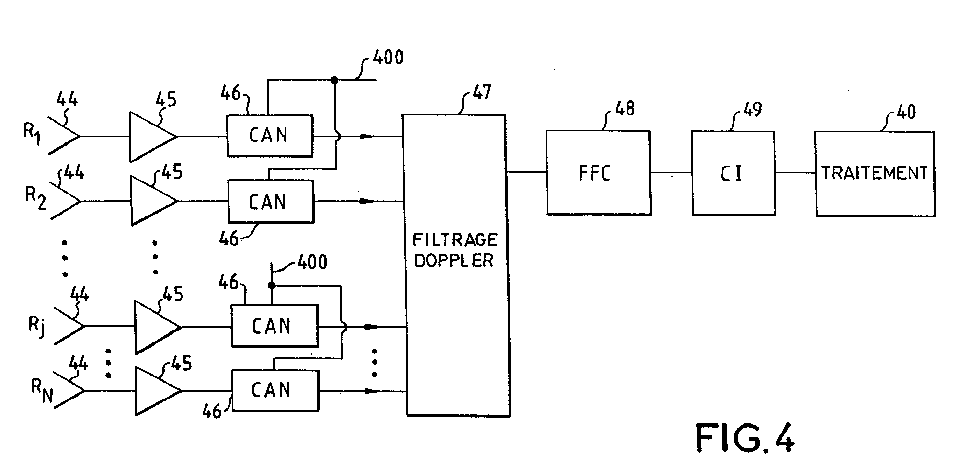

La figure 4 illustre un exemple d'association des moyens de traitement 40 à une chaîne de réception d'un radar à antenne lacunaire et à formation de faisceau par le calcul. Ces moyens de traitement 40 mettent en oeuvre les étapes précédentes en association avec la chaîne de réception. Cette chaîne de réception comporte des moyens de filtrage Doppler 47 effectuant des FFT (Transformées de Fourier Rapide) sur les signaux reçus et numérisés, des moyens de formation de faisceaux par le calcul 48 et des moyens de compression d'impulsion 49. Les signaux délivrés par ces moyens de compression d'impulsion sont fournis aux moyens de traitement 40 . Chaque module de réception $R_1, ...R_N$ comporte une antenne élémentaire 44 qui fournit le signal à un codeur 46 effectuant une conversion numérique du signal analogique. Les codeurs 46 effectuent ainsi l'échantillonnage et le codage des signaux reçus par les antennes élémentaires 44. Les codeurs 46 sont par exemple synchronisés par un même signal 400. Un recepteur 45, constitué d'amplificateurs, de filtres et/ou de démodulateurs, est par exemple placé en sortie d'antenne. Le signal reçu numérisé est transmis aux moyens de filtrage Doppler.

Un traitement non cohérent entraîne une perte par rapport au traitement cohérent, c'est-à-dire une diminution du rapport signal sur bruit après détection. Lorsque le nombre de faisceaux formés est voisin du nombre N de capteurs, le gain en rapport signal sur bruit S/B est sensiblement égal à N, valeur classique du gain d'un traitement cohérent, c'est-à-dire d'une intégration cohérente des échantillons reçus. L'invention utilise avantageusement le fait que lorsque le nombre de faisceaux formés est très grand devant le nombre N de capteurs, le gain se réduit alors jusqu'à celui d'une intégration non cohérente, soit jusqu'à une valeur de l'ordre de $\sqrt{N}$. On peut alors remplacer cette partie du traitement cohérent, qui est une combinaison linéaire des échantillons reçus, par un traitement non cohérent, beaucoup moins gourmand en opérations, et cela pour une perte relativement faible.

Un traitement cohérent réalise donc un ensemble de M combinaisons linéaires de N' signaux complexes, N' étant le nombre de signaux intégrés. Les N'.M coefficients correspondant à ces combinaisons linéaires sont uniquement des termes de phases. Le test de détection consiste à comparer le module du résultat de la combinaison à un seuil. Comme seul le module du résultat est utilisé, chaque jeu de N' phases peut être défini à une phase origine près. En effet, si on ne s'intéresse pas à la phase du signal résultant, seules comptent les phases relatives entres ces différents échantillons pour obtenir le module résultant. Il n'y a donc en fait que N'-1 valeurs de phase utiles. Les moyens de traitement peuvent par exemple prendre une phase nulle sur le premier coefficient. Ces phases étant numérisées, elles sont quantifiées sur un nombre K de niveaux. Ainsi, une phase donnée est remplacée par le multiple de $2\pi/K$ le plus proche. Par exemple, si seuls quatre niveaux de phases sont retenus, ces valeurs de phases peuvent être 0, $\pi/2$, $\pi$, et $3\pi/2$. Il n'y a donc que K valeurs possibles pour chaque terme de phase et donc $L=K^{N'-1}$ jeux de N'-1 phases. Si on considère l'application numérique suivante :

K = 4 valeurs de phases ;
N' = 6 signaux intégrés ;
Alors $L=K^{N'-1}B=4^5=1024$ jeux de phases différents.

Si on suppose que le nombre de jeux de phases utilisé, M, égal à L, alors toutes les combinaisons de phases possibles sont testées. Il y a un résultat pour chaque combinaison. Dans l'ensemble des résultats, il y en a un, ou plusieurs, dont le module est maximal. Ce résultat correspond à la mise en phase des N' signaux, à la quantification de phase près, le module somme étant maximal lorsque les signaux sont en phase. Ce résultat est aussi égal, toujours à la quantification près, à la somme des modules des signaux.

Ceci signifie que, plutôt que d'effectuer les L combinaisons linéaires des N' signaux, on peut calculer uniquement la somme des modules des N' signaux et obtenir exactement le même résultat, à la quantification de phase près. Dans le premier cas, le nombre d'opérations est L.N' multiplications-accumulations complexes, soit 4.L.N' multiplications-accumulations réelles. En se référant à l'application numérique précédente, cela fait 24576 multiplications-accumulations réelles. Dans le second cas, le nombre d'opérations est 2.N' multiplications réelles et N' additions réelles pour obtenir les modules au carré à partir des deux composantes (réelle et imaginaire) de chaque signal échantillonné, N' racines carrées pour obtenir leurs modules, et N' additions pour obtenir la somme de N' modules. Si on compte par exemple 12 opérations élémentaires pour obtenir chaque racine carrée, cela revient à un total de 16.N' opérations réelles, c'est-à-dire L/4 fois moins que le cas précédent. En particulier, si L=1024, cela fait 256 fois moins d'opérations que le cas précédent.

Il y a certes une perte associée à cette réduction, il s'agit de la perte de quantification de la phase. Si K est le nombre d'états de phase, une valeur de phase quantifiée correspond à un intervalle de phases de largeur $2\pi/K$. La quantification revient donc à affecter les signaux d'un bruit de phase compris entre $-\pi/K$ et $\pi/K$. La réduction de gain sur l'amplitude est donnée par le cosinus de ce bruit de phase, et la perte correspondante est le module au carré du cosinus du bruit de phase. En admettant que le bruit de quantification est uniforme dans son intervalle, la perte est alors donnée par la relation suivante :

$$P = \frac{\int_{-\pi/K}^{\pi/K}\cos^2(\theta)d\theta}{\int_{-\pi/K}^{\pi/K}d\theta} = \frac{\int_{-\pi/K}^{\pi/K}\frac{1}{2}(1+\cos(2\theta))d\theta}{\int_{-\pi/K}^{\pi/K}d\theta} = \frac{1}{2}\left(1 + \frac{0,5[\sin(2\theta]_{-\pi/K}^{\pi/K}}{[\theta]_{-\pi/K}^{\pi/K}}\right)$$

Soit

$$P = \frac{1}{2}\left(1 + \frac{\sin\left(\frac{2\pi}{K}\right)}{\frac{2\pi}{K}}\right) \qquad (1)$$

La quantité en dB est obtenue en prenant 10 $\log_{10}$ de l'expression (1) ci-dessus, soit :

$$P_{dB} = 10.\log_{10}\frac{1}{2}\left(1 + \frac{\sin\left(\frac{2\pi}{K}\right)}{\frac{2\pi}{K}}\right) \qquad (2)$$

A titre d'exemple, si le nombre de pas de quantification K = 4, alors $P_{dB}$ = -0,9 dB, et si ce nombre K = 2, alors $P_{dB}$ = -3 dB.

Ainsi, le nombre L d'états de phases est donné par l'expression $M=K^{N'-1}$, où N' est le nombre de signaux intégrés, et M le nombre de combinaisons linéaires à effectuer. Si le nombre K est assez grand, on peut remplacer l'ensemble du traitement cohérent par une simple intégration des modules des signaux, au prix d'une faible perte donnée par l'expression (2). K=4 peut déjà être considéré comme une valeur assez grande puisque la perte associée est inférieure à 1 dB.

La première étape 31 de traitement selon l'invention effectue donc une addition des modules des échantillons, suivie dans la deuxième étape 32 d'une comparaison à un seuil. Comme il vient d'être vu, il y a inévitablement une perte de traitement non cohérent. La première étape réalise en effet une partie du traitement cohérent pour obtenir un signal partiel qui aboutit à une résolution inférieure à la résolution finale. Elle est suivie dans la deuxième étape d'un test de détection simplifié qui produit une pré-détection. Ce test est simplifié car, à ce niveau, la détection est imparfaite. Pour qu'elle soit parfaite, il aurait fallu effectuer le traitement cohérent en entier.

La perte de traitement peut être jugée acceptable, et alors le seuil de détection est inchangé. Dans le cas contraire, une façon de compenser la perte de détection consiste en un abaissement du seuil de détection du niveau correspondant à la perte de traitement. Dans l'exemple précédent où K=4, cet abaissement du seuil correspondrait ainsi à 0,9 dB.

A l'issue de cette deuxième étape, le signal est détecté, et cette détection gagne à être confirmée, aussi bien pour réduire le taux de fausses alarmes (si le seuil a été baissé), que pour produire une localisation précise. En effet, le traitement non cohérent n'aboutit pas à la pleine résolution du radar et il peut subsister des ambiguïtés. Pour confirmer la détection, une troisième étape 33 effectue un traitement supplémentaire qui n'est effectué par exemple que sur les signaux qui ont donné lieu à détection, c'est-à-dire dont l'addition des modules échantillonnés a dépassé le seuil de pré-détection de la deuxième étape 32. Cette étape supplémentaire 33 porte donc sur un nombre réduit d'échantillons : seuls sont traités de cette façon les échantillons qui ont produit une détection. De ce fait, cette étape est moins gourmande en opérations que selon le traitement classique qui la fait appliquer à la totalité des échantillons. Elle vise notamment à mesurer les caractéristiques du signal détecté, en particulier sa direction d'arrivée. Dans ce but, elle exploite par exemple les signaux d'origine, ou reprend des signaux partiels produits par la première étape, et y applique le filtre complet. Le traitement de localisation analyse alors la phase des signaux qui ont produit une détection. De préférence, les filtres appliqués correspondent uniquement à des zones de l'espace où a été observée une pré-détection. Dans un autre exemple de réalisation, le traitement de localisation peut effectuer un traitement cohérent classique sur les signaux ayant donné lieu à détection.

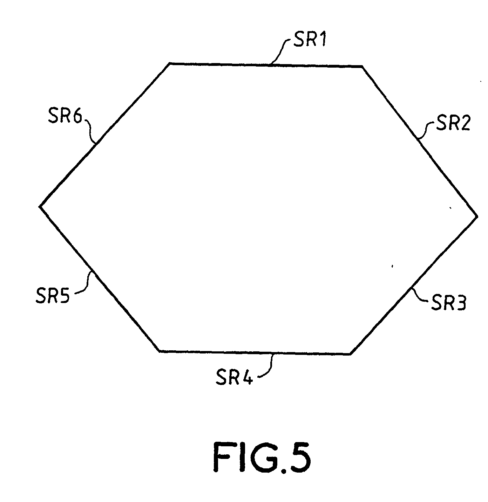

On considère par exemple un radar selon l'invention, comportant un dispositif à émission synthétique et à formation de faisceaux par le calcul dont le réseau d'antennes lacunaires est réparti en sous-réseaux, tel qu'illustré par la figure 5. Cette antenne comporte ainsi par exemple 6 sous-réseaux de réception SR1, ...SR6 ayant chacun 16 capteurs. Ces sous-réseaux sont par exemple linéaires, c'est-à-dire que leurs capteurs sont alignés. Ces sous-réseaux peuvent être répartis selon une géométrie quelconque. Ils peuvent être répartis par exemple en étoile ou en polygone comme l'illustre la figure 5 dans un cas particulier à 6 sous-réseaux. Ce polygone peut être régulier ou non. Les sous-réseaux peuvent être connexes ou disjoints. Ils peuvent être inscrits dans un cercle ayant un diamètre de plusieurs centaines de mètres. Seul le réseau de réception est représenté sur la figure 5. Le réseau d'émission peut évidemment avoir une structure semblable. Les émetteurs sont alors répartis en P sous-réseaux, les moyens de traitement additionnant dans la première étape des signaux issus des émissions de chacun des sous-réseaux émission. Les moyens de traitement additionnent dans la première étape 31 des signaux issus des émissions de chacun des sous-réseaux émission, reçus dans chaque sous-réseau de réception.

On admet que, compte tenu de sa structure lacunaire, ce réseau devrait idéalement tester 100 000 directions de visée. Un traitement classique consiste à effectuer 100 000 combinaisons linéaires des 6x16=96 signaux reçus par les capteurs, soit près de $4.10^7$ multiplications et accumulations par échantillon distance doppler.

Un traitement selon l'invention exécute beaucoup moins d'opérations, et cela d'autant plus qu'il ne prend en compte dans l'addition de la première étape que 6 signaux, à raison d'un signal par sous-réseau. Dans la première étape, il calcule par exemple $P_R$ faisceaux pour chacun des sous-réseaux par exemple par les moyens 48 de formation de faisceaux par le calcul, où $P_R$ est le nombre de capteurs par sous-réseau. Dans le présent exemple numérique, cela fait un calcul de 16 faisceaux pour chacun des 6 sous-réseaux. Si on estime que le calcul de chaque faisceau demande 20 opérations, cela fait 320x6 soit environ 2000 opérations par échantillon distance-doppler. Puis le calcul du module est appliqué à chaque faisceau ainsi calculé. A raison d'environ 10 opérations pour un calcul de module, à appliquer à chacun des 16 faisceaux de chacun des 6 sous-réseaux, il faut environ 1000 opération par échantillon distance-doppler.

L'intégration non cohérente consiste à additionner les modules ainsi obtenus. Pour chaque direction de l'espace, l'opération consiste à sélectionner le faisceau correspondant pour chacun des 6 sous-réseaux, et à additionner les 6 signaux ainsi sélectionnés. Le nombre de directions de l'espace est plus faible qu'après un traitement cohérent, car la résolution angulaire est moins bonne. Si l'on considère qu'il y a 5000 directions à prendre en compte, cette étape demande 5000x6=30000 opérations. Une comparaison au seuil ajoute une opération par direction, ce qui porte à 35000 opérations par échantillon distance doppler.

La somme des deux premières étapes ne dépasse pas $40000=10^4$ opérations par échantillon distance doppler, à comparer aux $4.10^7$ opérations du traitement classique. Avec une rafale de 50000 échantillons distance doppler, le nombre d'opérations par rafale est voisin de $4.10^4 \times 5.10^4 = 2.10^9$ selon cette méthode, et $4.10^7 \times 5.10^4 = 2.10^{12}$ selon la méthode classique.

La troisième étape 33 effectue le calcul complet uniquement dans les directions où il y a eu détection. On peut supposer, en prenant des majorants, qu'il y a 1000 cibles dans l'environnement et 1000 détections sur bruit ou sur parasites, et que chaque écho demande le traitement de 100 échantillons distance-doppler, dans 200 directions. Le traitement par formation de faisceaux par le calcul FFC demande alors 2000x100x200x6 multiplications / accumulations complexes, soit environ $1.10^{10}$ opérations. Un traitement selon l'invention, selon les trois étapes 31, 32, 33 demande de l'ordre de $10^{10}$ opération et est donc plus de 100 fois plus économe en opérations qu'un traitement classique.

L'invention s'applique avantageusement lorsqu'il est possible d'effectuer un prétraitement, comme dans l'exemple pris de radar à formation de faisceaux par le calcul comportant une antenne répartie en sous-réseaux lacunaires. C'est également le cas pour un traitement doppler cohérent sur plusieurs rafales. Par exemple, une rafale moyenne a une résolution de 10 m/s et une vitesse ambiguë de 100 m/s, et l'association de 5 rafales donne une résolution de 2 m/s, et lève l'ambiguïté jusqu'à 1000 m/s. Un traitement selon l'invention traite chaque rafale avec sa propre résolution, intègre les résultats en non cohérent, avec un seuil éventuellement abaissé, et « zoome » en cohérent, c'est-à-dire effectue un traitement à pleine résolution, uniquement dans les zones doppler correspondant aux détections.

L'invention propose une addition des modules. En cas de besoin, les moyens de traitement effectuent une addition de fonctions des modules des échantillons. Ainsi, au lieu d'additionner les modules des échantillons, ils peuvent par exemple additionner leurs carrés ou d'autres fonctions.

L'invention a été décrite pour un système ou procédé de détection électromagnétique, notamment pour un radar. Elle peut néanmoins s'appliquer pour d'autres types de détection ou réception électromagnétiques, notamment dans le domaine des télécommunications. Elle peut aussi s'appliquer pour des applications de détection acoustiques, notamment dans le domaine des sonars.

**Revendications**

1. Système de détection portant sur N signaux reçus, **caractérisé en ce qu'**il comporte des moyens de traitement (40) effectuant au moins une première étape (31) d'addition de fonctions des modules des signaux suivie d'une deuxième étape (32) de comparaison de la somme à un seuil donné, une détection correspondant au dépassement du seuil.

2. Système selon la revendication 1, **caractérisé en ce que** la première étape (31) effectue l'addition des modules des signaux.

3. Système selon l'une quelconque des revendications 1 ou 2, **caractérisé en ce que** le seuil est baissé d'au moins d'un niveau correspondant au moins à la perte de traitement non cohérent.

4. Système selon l'une quelconque des revendications 1 ou 2, **caractérisé en ce que** la deuxième étape est suivie d'une étape (33) effectuant un traitement de confirmation de la détection sur les signaux qui ont donné lieu à détection.

5. Système selon l'une quelconque des revendications précédentes, **caractérisé en ce que** la deuxième étape est suivie d'une étape (33) effectuant un traitement de localisation sur les signaux ayant donné lieu à détection.

6. Système selon la revendication 5, **caractérisé en ce que** le traitement de localisation effectue un traitement cohérent des signaux.

7. Système selon la revendication 5, **caractérisé en ce que** le traitement de localisation analyse la phase des signaux.

8. Système selon l'une quelconque des revendications précédentes, **caractérisé en ce que** les signaux sont échantillonnés.

9. Système selon l'une quelconque des revendications précédentes, **caractérisé en ce qu'**il comporte un dispositif à formation de faisceau par le calcul et à antenne en réseau lacunaire.

10. Système selon la revendication 9, **caractérisé en ce que** les capteurs sont répartis en N sous-réseaux (SR1, .... SR6), les moyens de traitement additionnant dans la première étape (31) N signaux reçus chacun d'un sous-réseau.

11. Système selon l'une quelconque des revendications précédentes, **caractérisé en ce qu'**il comporte un dispositif à émission synthétique à réseau d'émission lacunaire.

12. Système selon la revendication 11, **caractérisé en ce que** les émetteurs sont répartis en P sous-réseaux, les moyens de traitement additionnant dans la première étape (31) des signaux issus des émissions de chacun des sous-réseaux émission.

13. Système selon les revendications 9 à 12, **caractérisé en ce que** les moyens de traitement additionnent dans la première étape (31) des signaux issus des émissions de chacun des sous-réseaux émission, reçus dans chaque sous-réseau de réception.

14. Système selon les revendications 10 et 12 ou la revendication 13, **caractérisé en ce que** les sous-réseaux sont linéaires.

15. Système selon la revendication 14, **caractérisé en ce que** les sous-réseaux sont disposés en polygone.

**16.** Système selon l'une quelconque des revendications précédentes, **caractérisé en ce qu'**il est un système de détection électromagnétique.

**17.** Système selon l'une quelconque des revendications 1 à 15, **caractérisé en ce qu'**il est un système de détection acoustique.

**18.** Procédé de détection portant sur N signaux reçus, **caractérisé en ce qu'**il comporte au moins une première étape (31) d'addition de fonctions des modules des signaux suivie d'une deuxième étape (32) de comparaison de la somme à un seuil donné, une détection correspondant au dépassement du seuil.

**19.** Procédé selon la revendication 18, **caractérisé en ce que** la première étape (31) effectue l'addition des modules des signaux.

**20.** Procédé selon l'une quelconque des revendications 18 ou 19, **caractérisé en ce que** le seuil est baissé d'au moins d'un niveau correspondant au moins à la perte de traitement non cohérent.

**21.** Procédé selon l'une quelconque des revendications 18 ou 19, **caractérisé en ce que** la deuxième étape est suivie d'une étape (33) effectuant traitement de confirmation de la détection sur les signaux qui ont donné lieu à détection.

**22.** Procédé selon l'une quelconque des revendications 18 à 21, **caractérisé en ce que** la deuxième étape est suivie d'une étape (33) effectuant un traitement de localisation sur les signaux ayant donné lieu à détection.

**23.** Procédé selon la revendication 22, **caractérisé en ce que** le traitement de localisation effectue un traitement cohérent des signaux.

**24.** Procédé selon la revendication 22, **caractérisé en ce que** le traitement de localisation analyse la phase des signaux.

**25.** Procédé selon l'une quelconque des revendications 18 à 24, **caractérisé en ce que** les signaux sont échantillonnés.

**26.** Procédé selon l'une quelconque des revendications 18 à 25, **caractérisé en ce que** la détection est électromagnétique.

**27.** Procédé selon l'une quelconque des revendications 18 à 25, **caractérisé en ce que** la détection est acoustique.

FIG.1

FIG.2

EP 1 245 965 A1

```
                                                                    31
  ┌─────────────────────────────────────────────────┐
  │  TRAITEMENT À FAIBLE  RÉSOLUTION                  │
  └─────────────────────────────────────────────────┘
                          │
                          │                         32
              ┌───────────────────────┐
              │   PRÉ - DÉTECTION      │
              └───────────────────────┘
                          │
                          │                          33
  ┌─────────────────────────────────────────────────┐
  │  TRAITEMENT À PLEINE  RÉSOLUTION                  │
  └─────────────────────────────────────────────────┘
```

# FIG.3

FIG.4

FIG.5

**Office européen des brevets**

**RAPPORT DE RECHERCHE EUROPEENNE**

Numéro de la demande

EP 02 29 0733

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | EP 0 615 137 A (HUGHES MISSILE SYSTEMS) 14 septembre 1994 (1994-09-14) * abrégé * | 1,18 | G01S13/44 G01S7/28 |
| A | * page 4, colonne 5, ligne 57 - page 9, colonne 16, ligne 41; figures 1-4 * | 2-8,16, 19-26 | |
| A,D | FR 2 709 835 A (THOMSON CSF) 17 mars 1995 (1995-03-17) * abrégé * * page 3, ligne 34 - page 13, ligne 9; figures 1-25 * | 1-16, 18-26 | |
| A | EP 0 096 144 A (SELENIA IND ELETTRONICHE) 21 décembre 1983 (1983-12-21) * abrégé * * page 3, ligne 19 - page 8, ligne 18; figures 1-3 * | 1,2,6,7, 16,18, 19,23, 24,26 | |
| A | US 5 172 118 A (PEREGRIM THEODORE J ET AL) 15 décembre 1992 (1992-12-15) * abrégé * * colonne 2, ligne 57 - colonne 68, ligne 2; figures 1-14 * | 1-13,15, 16,18-26 | **DOMAINES TECHNIQUES RECHERCHES (Int.Cl.7)** G01S |
| A | DE 31 08 594 A (SIEMENS AG) 23 septembre 1982 (1982-09-23) * abrégé * * colonne 12, ligne 24 - colonne 20, ligne 15; figures 1-7 * | 1,2,4, 6-8,16, 18,19, 21,23-26 | |

Le présent rapport a été établi pour toutes les revendications

| Lieu de la recherche | Date d'achèvement de la recherche | Examinateur |
|---|---|---|
| LA HAYE | 28 mai 2002 | Blondel, F |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 02 29 0733

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

28-05-2002

| Document brevet cité au rapport de recherche | | Date de publication | Membre(s) de la famille de brevet(s) | | | Date de publication |
|---|---|---|---|---|---|---|
| EP 0615137 | A | 14-09-1994 | US | 5341141 | A | 23-08-1994 |
| | | | AU | 665706 | B2 | 11-01-1996 |
| | | | AU | 5753794 | A | 06-10-1994 |
| | | | CA | 2116713 | A1 | 10-09-1994 |
| | | | DE | 69406479 | D1 | 04-12-1997 |
| | | | DE | 69406479 | T2 | 19-03-1998 |
| | | | EP | 0615137 | A2 | 14-09-1994 |
| | | | ES | 2109602 | T3 | 16-01-1998 |
| | | | IL | 108887 | A | 18-02-1997 |
| | | | JP | 2625375 | B2 | 02-07-1997 |
| | | | JP | 7005248 | A | 10-01-1995 |
| | | | KR | 9710076 | B1 | 20-06-1997 |
| | | | NO | 940731 | A | 12-09-1994 |
| FR 2709835 | A | 17-03-1995 | FR | 2709835 | A1 | 17-03-1995 |
| | | | DE | 3820059 | A1 | 01-06-1995 |
| | | | GB | 2285549 | A ,B | 12-07-1995 |
| | | | US | 5874917 | A | 23-02-1999 |
| EP 0096144 | A | 21-12-1983 | EP | 0096144 | A1 | 21-12-1983 |
| | | | DE | 3278542 | D1 | 30-06-1988 |
| US 5172118 | A | 15-12-1992 | AUCUN | | | |
| DE 3108594 | A | 23-09-1982 | DE | 3108594 | A1 | 23-09-1982 |

EPO FORM P0460

Pour tout renseignement concernant cette annexe : voir Journal Officiel de l'Office européen des brevets, No.12/82